# EUROPEAN PATENT SPECIFICATION

(11) **EP 0 565 337 B1**
(45) Date of publication and mention of the grant of the patent: **16.06.1999**
(21) Application number: 93302682.5
(22) Date of filing: 06.04.1993
(51) Int. Cl.: F16D 65/097, F16D 65/092

(54) **A component for a disc brake**
Komponente für eine Scheibenbremse
Composant pour un frein à disque

(30) Priority: 10.04.1992 GB 9207985
(43) Date of publication of application: 13.10.1993
(73) Proprietor: LUCAS INDUSTRIES public limited company, London W1Y 4DJ (GB)
(72) Inventor: Willams, Anthony John, Garndiffaith, Pontypool (GB)
(74) Representative: Waite, Anthony William

(56) References cited:
- EP-A- 0 080 949
- DE-A- 3 107 531
- DE-A- 3 323 362
- DE-A- 3 534 239
- FR-A- 2 415 234
- US-A- 4 027 751
- US-A- 4 445 595

## Description

This invention relates to a component, such as a friction pad assembly, for a disc brake, primarily for a motor vehicle, and also embraces a disc brake incorporating such a component. The brake is of the general kind in which a pair of pad assemblies, each including a backing plate and a layer of friction material on a surface thereof, are mounted in the brake at either side of a rotatable disc and fluid and/or mechanically-operated actuator means are operable to urge the pad assemblies into braking engagement with the disc when the brake is actuated. The brake may incorporate a force distribution member or spreader between the actuator means and at least one of the pad assemblies and this may constitute an alternative or additional form of the aforesaid component.

In a brake of the aforesaid kind, each friction pad assembly is supported in the brake at the outer edges of the backplate and it is common to employ a spring or springs which react against a part of the brake and bias the pad assemblies downwardly against guide surfaces in order to minimise operational noise. This creates frictional resistance to movement of the friction pad assemblies into and out of engagement with the disc and, whilst this can be acceptable in relatively small brakes, such as those used on cars, the friction levels in larger commercial vehicle brakes can become intolerable because of the inevitably larger components and consequently larger springs employed. In order to relieve the frictional forces, it has been proposed to bias the friction pad assemblies upwardly away from the adjacent guide surface(s) by placing separate springs beneath the pad assemblies. Whilst these can achieve the desired effect, they are unsatisfactory in that, being separate components, they can be inadvertently omitted during original assembly, or after servicing of the brake. Moreover, because the springs degrade in use and become less effective, it is desirable to fit new springs when the friction pad assemblies are replaced or serviced and this cannot be guaranteed when the springs are supplied as separate components. It can also be desirable to load the aforesaid force distribution member in a given direction in the brake.

US 4027751 illustrates a friction element for a disc brake in which an anti-noise spring forms with the friction element a sub-assembly removable as a unit from a disc brake. A potential problem with this arrangement is that one end of the spring may readily be displaced relative to the friction element prior to assembly of the element into a brake. As a result, the proper positioning of the spring within the brake, and consequently its stressing and correct functioning cannot be ensured.

An object of the invention is to provide a brake component, such as a friction pad assembly, for a disc brake in which a biasing spring is incorporated in an improved simple and inexpensive manner as a normally inseparable component.

According to the invention, a disc brake component comprises a rigid plate, an elongate spring device, and an abutment on the component engaging a first surface of the spring device, portions of the spring device extending respectively to either side of the abutment along the component and having surfaces opposed to the first surface engaging respective facing surface parts of the component, the spring device being retained on the component in a normally inseparable manner prior to installation of the component in a brake, by co-action with the abutment and component surface parts.

The invention will be understood to include a disc brake incorporating one or more components of the invention arranged with an elongate support means of the brake engaged between said opposed surfaces and the spring device stressed against said abutment to bias the component(s) in a given direction within the brake.

The invention will now be described, by way of example, with reference to the accompanying drawings in which:-
Figure 1 is a plan view of a sliding caliper disc brake incorporating a pair of pad assemblies of the invention;
Figure 2 is a section along the line 2-2 of Figure 1;
Figure 3 is a detail to an enlarged scale of part of the brake of Figures 1 and 2;
Figure 4 is a plan view to an enlarged scale of part of the brake of Figures 1 and 2;
Figure 5 is a detail in plan view of an alternative type of brake component of the invention, and
Figure 6 is a side view of the assembly of Figure 5.

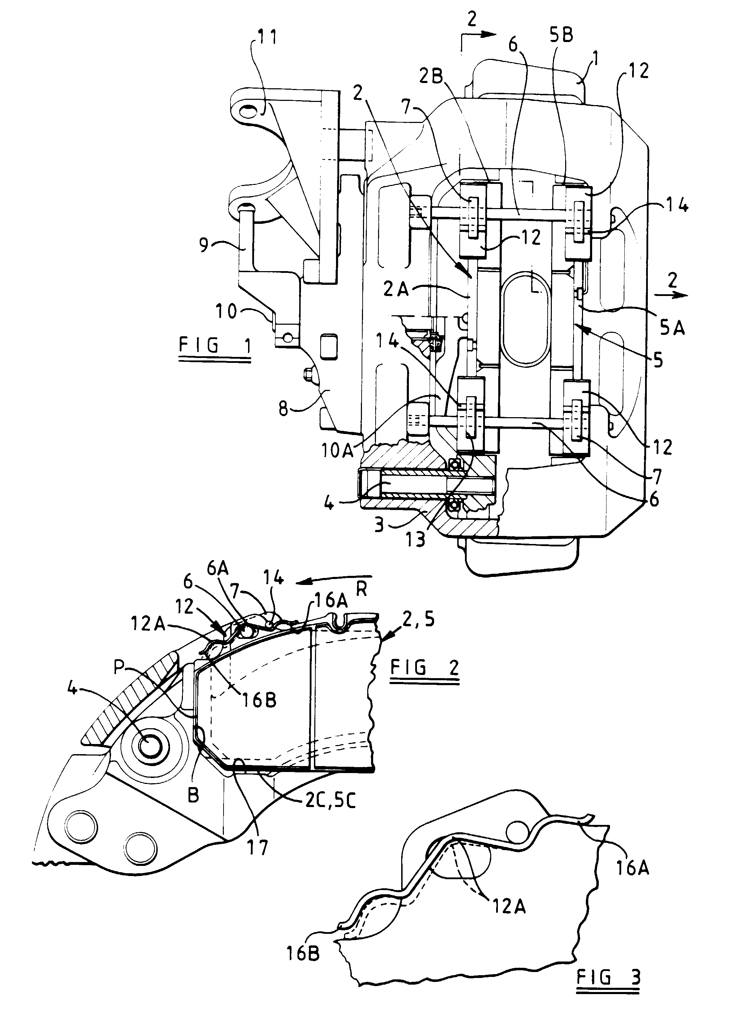

The disc brake illustrated in Figure 1 of the drawing is of the sliding caliper type and includes a fixed carrier 1 intended to be secured, as by bolting for example, to a fixed part of a vehicle in the vicinity of a wheel to be braked. The carrier 1 has a directly actuated brake friction pad assembly 2 slidably mounted therein and disposed at one side of a brake disc (not shown). A clamp member 3 is carried by guide pins, one of which can be seen at 4, for sliding movement relative to the carrier. The clamp member moves an indirectly actuated friction pad assembly 5 also mounted in the carrier 1 and disposed at the opposite side of the brake disc from the pad assembly 2. Each pad assembly includes a backing plate 2A, 5A, to one side of each of which is secured a respective layer of friction material 2B, 5B. The pad assemblies are supported at edge portions of the backing plates for sliding movement in the fixed carrier 1 and are retained in the carrier by pins 6 extending through slots 6A in upstanding integral lugs 7 of the backing plates, in conventional manner.

An actuator housing 8 is secured to the clamp member 3, as by bolts for example, and houses an appropriate form of force transmission means for cooperation with a force input cam actuated by a lever 9 mounted on an actuator shaft 10 and operated by means of an air actuator for example (not shown) which would be mounted on a support bracket 11 secured to the actuator housing. Actuating force is applied to the pad assembly 2 by way of a force distribution member 10A disposed between the backing plate 2A of this assembly and the actuator. This serves to distribute the actuating force over a substantial area of the pad assembly. Details of the internal actuator components are not shown since they do not form part of the present invention.

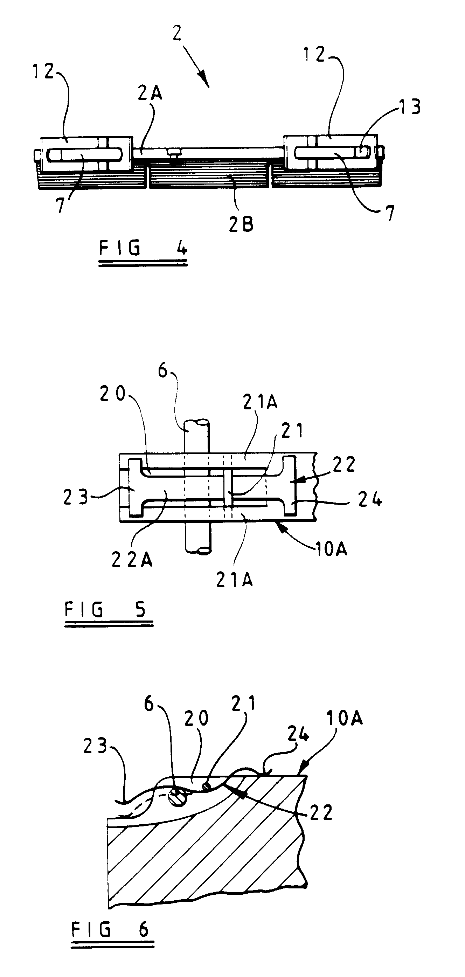

Each pad assembly 2, 5 is provided with a pair of springs 12, one of which can be seen in greater detail from Figures 2 to 4. Each spring is in the form of an elongate plate of generally sinusoidal form having a central longitudinal slot 13 (Figure 4) enabling the spring to be placed around one of the lugs 7 of a pad assembly for lateral retention thereon. The term sinusoidal is intended to indicate the generally wavy nature of the blade spring, rather than its strict geometrical shape and it will be seen that there is some variation in the width and depth of the individual undulations. The lug has an abutment which may be a pin 14 projecting transversely from either side thereof to form spigots, the spring being arranged on the pad assembly with the spigots resting in one of the troughs formed by the sinusoidal shape of the spring. The abutment may be formed in alternative ways, as, for example, by deforming the material of the backplate, or by the addition of material, such as by welding, after assembly of the spring on the pad assembly. The adjacent and remote extremities 16A, 16B of the spring provide respective convex surfaces which rest on adjacent parts of the upper edge of the backplate 2A, 5A. Before the pad assembly is installed in the brake, the spring 12 is retained thereon by co-action with the spigots of the pin 14, or other abutment, and the backplate, the effect being to bias the ends 16A, 16B of the spring lightly into engagement with the backplate, (as indicated partly in broken lines in Figure 2) resulting in reliable retention of the spring and a stable assembly. Since the spring is difficult to remove, the possibility of the pad being fitted without the spring is substantially precluded. The spring may be removed by first extracting the pin 14 and then lifting the spring off the lug 7.

Prior to installation of the pad assembly in the brake, the spring is in the position clearly illustrated in broken lines in Figure 3 with a central trough 12A thereof partly intersecting the slot 6A. To instal the pad assembly in the brake, the free end portion 16B of the spring remote from the pin 14 is lifted slightly to permit the insertion of a pad support pin 6 of the brake through the lug 7 and the spring remains in stressed condition when released into contact with the upper surface of the pin, being then in the position illustrated in full lines in Figures 2 and 3 with the end portion 16B spaced from the backplate. The force thus generated is reacted between the spigot 14 and the backplate via the end 16A of the spring, with the result that an upward force is exerted on the pad assembly which either removes the lower edge 2C, 5C from the adjacent normally supporting surfaces within the carrier, one of which can be seen at 17 in Figure 2, or at least relieves the force between the pad lower edge and surfaces 17, thereby substantially reducing the friction between the pad assembly and caliper. It is to be noted that in this embodiment the spring typically deflects about the spigot 14 through an angle of about 6.8° from its position in its free state.

Assuming the normal rotation of the brake disc to be that indicated by the arrow R in Figure 2, there would normally be a slight clearance between the forward edge P of the pad assembly 2, 5 and the adjacent surface B of the carrier 1. The metal to metal contact which occurs when this clearance is taken up during braking can lead to an undesirable "clonk" and an additional effect of the spring 12 could be to produce a generally circumferential component of force resisting the take-up of this clearance and thereby lessening the severity of the impact between the surfaces P and B with a consequent reduction in, or elimination of noise. It would alternatively be possible to arrange for the spring 12 at one end of the pad assembly to bias the assembly continually so that the surfaces P and B at the other end thereof are maintained in engagement in order to eliminate the aforesaid impact noise.

The present invention may be applied to components other than pad assemblies and Figures 5 and 6 illustrate the invention applied to a force distribution member or spreader, an example of which is designated 10A in Figure 1. The spreader 10A is supported in the brake on the pins 6 in the same manner as the pad assemblies 2, 5 and is provided with a slot 20 at each lateral end region thereof, one such slot and end region being illustrated in Figures 5 and 6. The spreader also has an abutment pin 21 extending across the slot and supported in the opposed side walls 21A of the latter. The spreader carries a pair of sinusoidal springs similar to those described previously, one adjacent each end region thereof. One of these springs is illustrated in Figures 5 and 6 and designated 22.

The main body 22A of each spring 22, is of a width such as to lie comfortably within the slot 20 and enlarged end portions 23, 24, bear against the upper surface of the spreader, as illustrated in broken lines in Figure 6, i.e. prior to installation of the spreader in the brake. In this condition, the spring lies under the pin 21 with its end portions 23, 24 engaging the upper surface of the spreader and are stressed between the pin and this surface so as to be retained substantially inseparably on the spreader. When the spreader is installed in the brake, the end portion 23 is lifted from its engaged position shown in broken lines to engage the spring over the pin 6, the spring being thereby stressed so as to lift the spreader in the manner described with reference to the pad assemblies of Figures 2 and 3. The end 23 of the stressed spring remains spaced from the upper surface of the spreader, as previously.

The invention will be seen to provide a component, such as a pad assembly or spreader in which a spring is incorporated in a simple and effective manner to form a substantially inseparable part of the component before the latter is installed for use in a brake, and in which the spring also acts, with the component installed, to reduce the friction between the component and caliper. It will be understood that the component of the invention may be employed not only in a sliding caliper disc brake of the type described and other types, but may also be employed in various types of fixed caliper disc brakes.

Although the components shown and described herein are lifted by the action of the springs 12 and 22 when installed in a brake, they may be arranged, particularly in the case of a spreader, to be urged in other directions such as downwardly within the brake.

## Claims

1. A disc brake component comprising a rigid plate (2A, 5A), an elongate spring device (12), and an abutment (14) on the component engaging a first surface of the spring device, portions of the spring device extending respectively to either side of the abutment along the component and having surfaces (16A, 16B) opposed to the first surface engaging respective facing surface parts of the component, the spring device being retained on the component in a normally inseparable manner, prior to installation of the component in a brake, by co-action with the abutment and component surface parts.

2. A component according to Claim 1, wherein the spring device (12) is stressed to load the opposed surfaces thereof into engagement with the facing surface parts of the component.

3. A component according to Claim 1 or Claim 2, wherein the spring device (12) is a curvate blade.

4. A component according to any one of Claims 1 to 3, wherein the spring device (12) is of generally sinusoidal shape and the abutment engages the spring device in a trough of one arcuate portion thereof.

5. A component according to Claim 4, wherein an arcuate portion of the spring device between the trough and one of said spring device portions forms a further trough (12A) opposed to that in which the abutment (14) is engaged and arranged to receive, in use, an elongate support (6) of the brake, the support (6) engaging the spring device (12) at the opposite side to the abutment (14) such as to stress the spring device against the abutment and one of said surface parts and thereby urge the component in a desired direction within the brake.

6. A component according to any one of the preceding claims, wherein the rigid plate (2A, 5A) has an upstanding lug (7) co-acting with part of the spring device (12) to retain the spring device laterally of the component.

7. A component according to Claim 6, wherein the lug extends (7) through a slot (13) in said part of the spring device to provide the lateral restraint.

8. A component according to any one of Claims 5 to 7, wherein the plate (2A, 5A) is provided with an aperture (6A) to receive said elongate support (6), and the part of the spring device (12) forming the further trough at least partially intersects the opening so as to be displaced and stressed by insertion of the support through the opening.

9. A component according to Claim 8, wherein the slot (13) is elongate in a direction generally longitudinally of the assembly.

10. A component according to any one of the preceding claims in the form of a friction pad assembly, wherein the rigid plate (2A, 5A) carries a lining (2B, 5B) of friction material on one face thereof.

11. A component according to any one of Claims 1 to 4 in the form of a force distribution member (10A) for a friction pad assembly, wherein lateral restraint of the spring device (12) relative to the assembly is provided by a recess (20) of the rigid plate within which the spring device is housed.

12. A disc brake having at least one component according to any one of Claims 1 to 11, wherein each component is slidably mounted on at least one elongate support (6) extending transversely of the brake disc, a portion of the spring device (12) between said first surface thereof and one of the spring device portions forming a recess (12A) providing a surface opposed to that with which the component abutment (14) is engaged, the recess receiving therein the elongate support (6) which engages said recess surface in such a manner as to stress the spring device against the abutment (14) and one of said surface parts of the component assembly to urge the component in a desired direction within the brake.

13. A disc brake according to Claim 11, wherein stressing of the spring device (12) by engagement with the elongate support (6) lifts one of the spring device portions (16B) away from the associated component surface part, leaving only one of said surface parts engaged by the adjacent opposed surface (16A) of the spring device, and the other surface of the spring device engaging the abutment (14).

14. A disc brake according to Claim 12 or Claim 13, having a pair of components in the form of friction pad assemblies (2, 5) arranged at either side of the disc, the spring devices (12) acting to lift the pad assemblies within the brake.

## Patentansprüche

1. Scheibenbremsenkomponente, umfassend eine steife Platte (2A, 5A), eine längliche Federvorrichtung (12), und ein Widerlager (14) an der Komponente, das in eine erste Oberfläche der Federvorrichtung eingreift, wobei sich Bereiche der Federvorrichtung zu jeder der beiden Seiten des Widerlagers entlang der Komponente erstrecken und Oberflächen (16A, 16B) aufweisen, welche der ersten Oberfläche, die in die jeweiligen gegenüberliegenden Oberflächenteile der Komponente eingreift, gegenüberliegen, wobei die Federvorrichtung an der Komponente vor dem Einbau der Komponente in eine Bremse durch Mitwirkung des Widerlagers und der Oberflächenteile der Komponente in einer normalerweise untrennbaren Weise gehalten wird.

2. Komponente nach Anspruch 1, wobei die Federvorrichtung (12) gespannt wird, um deren gegenüberliegende Oberflächen in Eingriff mit den gegenüberliegenden Oberflächenteilen der Komponente zu bringen.

3. Komponente nach Anspruch 1 oder Anspruch 2, wobei es sich bei der Federvorrichtung (12) um ein gekrümmtes Blatt handelt.

4. Komponente nach einem der Ansprüche 1 bis 3, wobei die Federvorrichtung (12) eine im wesentlichen sinusförmige Form aufweist und das Widerlager in einer Mulde eines gekrümmten Bereiches der Federvorrichtung in die Federvorrichtung eingreift.

5. Komponente nach Anspruch 4, wobei ein gekrümmter Bereich der Federvorrichtung zwischen der Mulde und einem der Federvorrichtungsbereiche eine weitere Mulde (12A) gegenüber jener bildet, in welche das Widerlager (14) eingreift, und entsprechend angeordnet ist, um während der Anwendung eine längliche Halterung (6) der Bremse aufzunehmen, wobei die Halterung (6) an der dem Widerlager (14) gegenüberliegenden Seite in die Federvorrichtung (12) eingreift, um dadurch die Federvorrichtung gegen das Widerlager und einen der Oberflächenteile zu spannen und somit die Komponente in eine gewünschte Richtung innerhalb der Bremse zu drücken.

6. Komponente nach einem der vorhergehenden Ansprüche, wobei die steife Platte (2A, 5A) eine nach oben stehende Öse (7) aufweist, die mit einem Teil der Federvorrichtung (12) zusammenarbeitet, um die Federvorrichtung seitlich von der Komponente zu halten.

7. Komponente nach Anspruch 6, wobei sich die Öse (7) durch einen Schlitz (13) im Teil der Federvorrichtung erstreckt, um den seitlichen Halt zu schaffen.

8. Komponente nach einem der Ansprüche 5 bis 7, wobei die Platte (2A, 5A) mit einer Öffnung (6A) ausgestattet ist, um die längliche Halterung (6) aufzunehmen, und der Teil der Federvorrichtung (12), der die weitere Mulde bildet, zumindest teilweise die Öffnung schneidet, um durch Einführung der Halterung durch die Öffnung verschoben und gespannt zu werden.

9. Komponente nach Anspruch 8, wobei der Schlitz (13) in eine Richtung, die im allgemeinen längsseitig zur Einheit ist, länglich ist.

10. Komponente nach einem der vorhergehenden Ansprüche in der Form einer Bremsklotzeinheit, wobei die steife Platte (2A, 5A) eine Auskleidung (2B, 5B) mit Reibmaterial an einer ihrer Vorderflächen trägt.

11. Komponente nach einem der Ansprüche 1 bis 4 in Form eines Kraftverteilungselements (10A) für eine Bremsklotzeinheit, wobei das seitliche Zurückhalten der Federvorrichtung (12) relativ zur Einheit durch eine Aussparung (20) der steifen Platte geschaffen wird, in der sich die Federvorrichtung befindet.

12. Scheibenbremse mit mindestens einer Komponente nach einem der Ansprüche 1 bis 11, wobei jede Komponente gleitend an mindestens einer länglichen Halterung (6) befestigt ist, die sich quer zur Bremsscheibe erstreckt, wobei ein Bereich der Federvorrichtung (12) zwischen ihrer ersten Oberfläche und einem der Federvorrichtungsbereiche eine Aussparung (12A) bildet, der eine Oberfläche schafft, welche jener gegenüberliegt, in welche das Komponentenwiderlager (14) eingreift, wobei die Aussparung die längliche Halterung (6) aufnimmt, die auf solche Art in die Aussparungsoberfläche eingreift, daß die Federvorrichtung gegen das Widerlager (14) und eines der Oberflächenteile der Komponenteneinheit gespannt wird, um die Komponente in eine gewünschte Richtung innerhalb der Bremse zu drücken.

13. Scheibenbremse nach Anspruch 11, wobei das Spannen der Federvorrichtung (12) durch Eingriff in die längliche Halterung (6) einen der Federvorrichtungsbereiche (16B) weg vom Oberflächenteil der zugehörigen Komponente hebt, wodurch nur einer der Oberflächenteile in Eingriff mit der benachbarten gegenüberliegenden Oberfläche (16A) der Federvorrichtung bleibt, und die andere Oberfläche der Federvorrichtung in das Widerlager (14) eingreift.

14. Scheibenbremse nach Anspruch 12 oder 13 mit einem Paar der Bauteile in Form von Bremsklotzeinheiten (2, 5), die an einer der beiden Seiten der Scheibe angeordnet sind, wobei die Federvorrichtungen (12) die Bremsklotzeinheiten innerhalb der Bremse anheben.

## Revendications

1. Composant de frein à disque comprenant un plateau rigide (2A, 5A), un dispositif de ressort allongé (12) et une butée (14) sur le composant entrant en contact avec une première surface du dispositif de ressort, des portions du dispositif de ressort s'étendant respectivement de part et d'autre de la butée le long du composant et possédant des surfaces (16A, 16B) opposées à la première surface entrant en contact avec des parties de surfaces frontales respectives du composant, le dispositif de ressort étant retenu sur le composant d'une manière normalement inséparable, avant le montage du composant dans un frein, par l'action conjointe de la butée et des parties de surfaces du composant.

2. Composant selon la revendication 1, dans lequel le dispositif de ressort (12) est mis sous contrainte pour charger ses surfaces opposées en contact avec les parties de surfaces frontales du composant.

3. Composant selon la revendication 1 ou 2, dans lequel le dispositif de ressort (12) est une lame courbe.

4. Composant selon l'une quelconque des revendications 1 à 3, dans lequel le dispositif de ressort (12) est de forme généralement sinusoïdale et la butée entre en contact avec le dispositif de ressort dans un creux d'une de ses portions arquées.

5. Composant selon la revendication 4, dans lequel une portion arquée du dispositif de ressort entre le creux et une desdites portions du dispositif de ressort forme un creux supplémentaire (12A) opposé à celui dans lequel vient s'insérer la butée (14) et qui est arrangé pour recevoir, en état de marche, un support allongé (6) du frein, le support (6) entrant en contact avec le dispositif de ressort (12) sur le côté opposé à celui de la butée (14) de façon à contraindre le dispositif de ressort contre la butée et contre une desdites parties de surfaces, et pour ainsi presser le composant dans une direction désirée à l'intérieur du frein.

6. Composant selon l'une quelconque des revendications précédentes, dans lequel le plateau rigide (2A, 5A) possède un tenon dressé (7) agissant de manière conjointe avec une partie du dispositif de ressort (12) de façon à retenir le dispositif de ressort latéralement par rapport au composant.

7. Composant selon la revendication 6, dans lequel le tenon (7) s'étend à travers une fente (13) dans ladite partie du dispositif de ressort pour procurer la retenue latérale.

8. Composant selon l'une quelconque des revendications 5 à 7, dans lequel le plateau (2A, 5A) est muni d'un orifice (6A) pour recevoir ledit support allongé (6) et la partie du dispositif de ressort (12) formant le creux supplémentaire coupe au moins en partie l'ouverture de façon à être déplacée et mise sous contrainte par l'insertion du support à travers l'ouverture.

9. Composant selon la revendication 8, dans lequel la fente (13) est allongée dans une direction généralement longitudinale de l'assemblage.

10. Composant selon l'une quelconque des revendications précédentes, sous la forme d'un assemblage de plaquette de friction dans lequel le plateau rigide (2A, 5A) porte un revêtement (28, 5B) d'une matière de friction sur une de ses faces.

11. Composant selon l'une quelconque des revendications 1 à 4, sous la forme d'un élément de distribution de force (10A) pour un assemblage de plaquette de friction, dans lequel la retenue latérale du dispositif de ressort (12) par rapport à l'assemblage est fournie par un évidement (20) pratiqué dans le plateau rigide, dans lequel est logé le dispositif de ressort.

12. Frein à disque possédant au moins un composant selon l'une quelconque des revendications 1 à 11, dans lequel chaque composant est monté en coulissement sur au moins un support allongé (6) s'étendant transversalement par rapport au disque de frein, une portion du dispositif de ressort (12) entre ladite première surface et une des portions du dispositif de ressort formant un évidement (12A) procurant une surface opposée à celle avec laquelle la butée (14) du composant entre en contact, l'évidement recevant le support allongé (6) qui entre en contact avec ladite surface d'évidement de façon à contraindre le dispositif de ressort contre la butée (14) et contre une desdites parties de surfaces de l'assemblage de composant pour presser le composant dans une direction désirée à l'intérieur du frein.

13. Frein à disque selon la revendication 11, dans lequel la mise sous contrainte du dispositif de ressort (12) par le contact avec le support allongé (6) soulève une des portions (16B) du dispositif de ressort à l'écart de la partie de surface de composant associée en laissant uniquement une desdites parties de surfaces en contact avec la surface opposée adjacente (16A) du dispositif de ressort, l'autre surface du dispositif de ressort entrant en contact avec la butée (14).

14. Frein à disque selon la revendication 12 ou 13, possédant une paire de composants sous la forme d'assemblages de plaquettes de friction (2, 5) arrangés de part et d'autre du disque, les dispositifs de ressorts (12) agissant pour soulever les assemblages de plaquettes à l'intérieur du frein.
